# EUROPÄISCHE PATENTSCHRIFT

(11) **EP 1 195 508 B1**
(45) Veröffentlichungstag und Bekanntmachung des Hinweises auf die Patenterteilung: **11.05.2005**
(21) Anmeldenummer: 01123985.2
(22) Anmeldetag: 08.10.2001
(51) Int. Cl.: F02D 41/02, F01N 3/08, F01N 3/023, F01N 9/00

(54) **Verfahren zum Betrieb einer Abgasreinigungsanlage einer Brennkraftmaschine eines Kraftfahrzeugs**
Process for operating an exhaust gas purification device of a motor vehicle internal combustion engine
Procédé d'opération d'un système de purification des gaz d'échappement d'un moteur thermique de véhicule automobile

(30) Priorität: 07.10.2000 DE 10049659
(43) Veröffentlichungstag der Anmeldung: 10.04.2002
(73) Patentinhaber: DaimlerChrysler AG, 70567 Stuttgart (DE)
(72) Erfinder: Christner, Bernd, 73249 Wernau (DE); Duvinage, Frank, Dr., 73230 Kirchheim/Teck (DE); Fekete, Nicholas, Dr., 70734 Fellbach (DE); Nolte, Arno, 70188 Stuttgart (DE); Paule, Markus, 73630 Remshalden (DE); Sander, Henning, 71634 Ludwigsburg (DE)

(56) Entgegenhaltungen:
- EP-A- 0 859 132
- DE-A- 19 827 636
- US-A- 5 050 376
- WINTERHAGEN J: "Der neue Peugeot 607" ATZ AUTOMOBILTECHNISCHE ZEITSCHRIFT,FRANCKH'SCHE VERLAGSHANDLUNG. STUTTGART,DE, Bd. 2000, Nr. 5, Mai 2000 (2000-05), Seiten 300-308, XP002172871 ISSN: 0001-2785

## Beschreibung

Die Erfindung betrifft ein Verfahren zum Betrieb einer Abgasreinigungsanlage einer Brennkraftmaschine eines Kraftfahrzeuges nach dem Oberbegriff des Anspruchs 1.

Bei solchen Abgasreinigungsanlagen wird wenigstens ein Abgasreinigungs-Betriebsparameter überwacht. Wenn vorgegebene Regenerationsstartbedingungen vorliegen, wird ein Regenerations-Betriebszustand zur wenigstens teilweisen Regeneration der Abgasreinigungsanlage aktiviert. Dabei gehört zu den Regenerationsstartbedingungen, dass der wenigstens eine Abgasreinigungs-Betriebsparameter einen vorgebbaren Sollbetriebsbereich verlassen hat.

So ist es z.B. bekannt, dass bei Partikelfiltern oder NOx-Speicherkatalysatoren von Zeit zu Zeit eine Regeneration der Abgasnachbehandlungseinrichtung erforderlich ist. Bei Partikelfiltern ist z.B. ein Abbrennen der angelagerten Partikel notwendig, damit der Filter in der Lage ist, seine Filterfunktion weiterhin durchzuführen. Bei NOx-Speicherkatalysatoren ist eine Regeneration spätestens dann erforderlich, wenn die Speicherkapazität des Speicherkatalysators erschöpft ist. Es muss dann eine Desorption zur Reaktion der gespeicherten NOx-Verbindungen erfolgen, wobei eine gleichzeitige Reduktion der NOₓ-Verbindungen stattfinden soll. Derartige Regenerationsmechanismen sind allgemein bekannt.

Die Regeneration von Abgasnachbehandlungseinrichtungen der Abgasreinigungsanlage erfordert dabei häufig, dass die Abgasnachbehandlungseinrichtung auf hohe Temperaturen, insbesondere auf Temperaturen im Temperaturbereich oberhalb von 450°C bis 650°C aufgeheizt wird.

Dabei ergibt sich jedoch das Problem, dass der Energiebedarf für die Erzeugung dieser hohen Temperaturen im Bereich der Abgasnachbehandlungseinrichtungen der Abgasreinigungsanlage sehr hoch ist. Insbesondere bei niedrigen Fahrzeuggeschwindigkeiten und den damit einhergehenden geringen Motorlasten steht die hierzu erforderliche Energie nicht immer in ausreichendem Maß zur Verfügung, so dass nicht sichergestellt ist, dass der Regenerationsprozess durchführbar ist.

In der Offenlegungsschrift EP 0 859 132 A1 ist ein gattungsgemäßes Verfahren zum Betrieb einer Abgasreinigungsanlage offenbart, bei dem für eine jeweils bevorstehende Fahrt ein Betriebsplan für Regenerationsvorgänge einer Komponente der Abgasreinigungsanlage unter Berücksichtigung der Fahrdistanz, des Straßentyps, von Höhenangaben etc. im Voraus erstellt wird. Die bevorstehende Fahrt wird dazu in Abschnitte unterteilt, für die jeweils getrennt ermittelt wird, ob ein Regenerationsvorgang aktiviert werden soll. In einer Variante für einen Benzinmotor wird dazu für jeden Fahrabschnitt die Temperatur eines Stickoxid-Absorptionsmittels vorausgeschätzt und mit einem erlaubten Temperaturwert verglichen. Abhängig davon wird die Regeneration eines Stickoxidspeichers bei zwei unterschiedlichen Beladungswerten aktiviert. In einer Variante für einen Dieselmotor wird eine Partikelfilterregeneration abhängig davon, in welchem von fünf verschiedenen Betriebszuständen sich der Dieselmotor befindet, bei zwei verschieden hohen Beladungsschwellwerten aktiviert.

Aufgabe der Erfindung ist es, die Aktivierung des Regenerations-Betriebszustandes so durchzuführen, dass eine wenigstens teilweise Regeneration der Abgasreinigungsanlage bei möglichst geringem zusätzlichen Energieaufwand im Kundenbetrieb betriebssicher durchführbar ist.

Die Aufgabe der Erfindung wird bei Zugrundeliegen des gattungsgemäßen Verfahrens erfindungsgemäß durch ein Verfahren mit den kennzeichnenden Merkmalen des Anspruches 1 gelöst.

Beim erfindungsgemäßen Verfahren zum Betrieb einer Abgasreinigungsanlage einer Brennkraftmaschine eines Kraftfahrzeuges wird wenigstens ein Abgasreinigungs-Betriebsparameter überwacht. Ein Regenerations-Betriebszustand zur wenigstens teilweisen Regeneration der Abgasreinigungsanlage wird immer dann aktiviert, wenn vorgegebene Regenerationsstartbedingungen vorliegen. Zu diesen Regenerationsstartbedingungen gehört, dass der wenigstens eine Abgasreinigungs-Betriebsparameter einen vorgebbaren Sollbetriebsbereich verlassen hat. Dabei wird während des Betriebes der Verbrennungseinrichtung ein spezifisches Betriebsprofil derselben ermittelt. Der Sollbetriebsbereich des wenigstens einen Abgasreinigungs-Betriebsparameters wird dabei in Abhängigkeit von dem ermittelten Betriebsprofil variabel vorgegeben.

Hierdurch wird der Sollbetriebsbereich für den wenigstens einen Abgasreinigungs-Betriebsparameter an das bei diesem Fahrzeug auftretende Betriebsprofil angepasst. Der Regenerations-Betriebszustand wird möglichst dann aktiviert, wenn die Bedingungen für die Durchführung einer wenigstens teilweisen Regeneration der Abgasreinigungsanlage günstig sind. Auf diese Weise wird der für die Regeneration der Abgasreinigungsanlage erforderliche zusätzliche Energieverbrauch (zusätzlicher Kraftstoffverbrauch) möglichst gering gehalten.

Gemäß vorteilhafter Ausgestaltung der Erfindung wird hierzu das Betriebsprofil in Abhängigkeit von unterschiedlichen erfassten Größen bestimmt, wobei dies vorzugsweise Größen sind, die im Fahrzeug ohnehin erfasst bzw. gemessen werden. Bei diesen Größen kann es sich insbesondere um den aktuellen Betriebspunkt der Verbrennungseinrichtung, beispielsweise in Abhängigkeit der Drehzahl und/oder der Einspritzmenge von Kraftstoff bestimmt, den Lastzustand der Brennkraftmaschine, wie er sich beispielsweise aus der mittleren Einspritzmenge oder dem mittleren Brennkammerdruck ergibt, die Abgastemperatur und/oder die Fahrzeuggeschwindigkeit handeln. Dabei kann zur Bestimmung dieser Betriebsparameter nicht jeweils nur der aktuelle Wert herangezogen werden, sondern es kann auch über die Zeit hinweg die Häufigkeitsverteilung der Betriebsparameter ermittelt werden und zur Bestimmung des Betriebsparameters dann herangezogen werden.

Gemäß vorteilhafter Ausgestaltung der Erfindung ist es auch möglich, aus den im Fahrzeug erfassten Informationen einen Fahrzustand zu ermitteln, der bei der Ermittlung des Betriebsprofils berücksichtigt wird. In vorteilhafter Weise beinhaltet der Fahrzustand eine Einteilung in unterschiedliche, den Fahrzustand charakterisierende Klassen, die den Betrieb des Fahrzeuges repräsentieren. Gewünschte Klassenaufteilungen können dabei anhand von logischen Verknüpfungen, erfahrungsbasierten Zuordnungen oder neuronalen Netzen durchgeführt werden. Eine mögliche Aufteilung in Klassen kann beispielsweise die Klassen Niedriglast (Leerlaufbetrieb/Stau), Teillast (Stadtverkehr), obere Teillast (Landstraße/Außerort) und Hochlast/Volllast (Autobahnbetrieb) umfassen. Zur Einteilung des Fahrzustandes in unterschiedliche Klassen können Informationen herangezogen werden, die aus im Motormanagement erfassten Größen abgeleitet sind, wie beispielsweise die Motordrehzahl und der Zündzeitpunkt. Ebenso können im Getriebemanagement erfasste Größen, wie aktuelle Getriebeübersetzung und Schaltschwellen für die Zeitpunkte des Schaltens zwischen den einzelnen Getriebestellungen dafür verwendet werden. Ebenso können hierbei aus einem Navigationssystem abgeleitete Informationen, wie beispielsweise die ermittelte Fahrtroute zum Fahrziel, dazu herangezogen werden.

Gemäß einer vorteilhaften Ausgestaltung der Erfindung wird aus dem zeitlichen Verlauf des Betriebsprofils auf einen günstigen, zu erwartenden Betriebszustand geschlossen und bei der Bestimmung des Sollbetriebsbereiches des wenigstens einen Abgasreinigungs-Betriebsparameters berücksichtigt. Hierzu kann auch der zeitliche Verlauf des Betriebsprofils erfasst werden und aus dem Vergleich des Betriebsprofils mit anderen, früher ermittelten Betriebsprofilen auf das zukünftig zu erwartende Betriebsprofil geschlossen werden. Hierzu kann das aktuelle Betriebsprofil und dessen zeitlicher Verlauf mit den früheren Betriebsprofilen und ihrem zeitlichen Verlauf verglichen werden und aufgrund einer Ähnlichkeit im Verlauf des Betriebsprofils dann auf das zu erwartende Betriebsprofil geschlossen werden. Aber auch die statistische Häufigkeit der einzelnen Betriebszustände, wie sie über die Zeit hinweg auftreten, erlaubt es, darauf zu schließen, wie oft günstige Regenerationsbedingungen vorliegen. Sind diese selten, so wird man, sobald diese vorliegen, schon frühzeitig eine Regeneration durchführen. Andererseits wird man eine Regeneration bei schlechten Bedingungen und großer Wahrscheinlichkeit günstiger Bedingungen möglichst hinausziehen, bis gute Regenerationsbedingungen vorliegen.

Gemäß vorteilhafter Ausgestaltung der Erfindung wird bei Abgasreinigungsanlagen, die mehr als eine (Abgas-)Nach-behandlungseinrichtung umfassen, wobei jeweils bei Vorliegen spezifischer Regenerationsstartbedingungen die Durchführung einer wenigstens teilweisen Regeneration der entsprechenden Nachbehandlungseinrichtung erfolgt, die Erzeugung von Regenerations-Betriebszuständen der Nachbehandlungseinrichtungen aufeinander abgestimmt. Die Abstimmung der Durchführung der Regeneration der einzelnen Nachbehandlungseinrichtungen aufeinander umfasst es dabei, dass dann, wenn eine erste Nachbehandlungseinrichtung einer Regeneration bedarf, diese, wenn ungünstige Regenerationsbedingungen vorliegen, auf einen späteren Zeitpunkt verschoben werden, wenn auch die Regeneration einer zweiten Abgasnachbehandlungseinrichtung erforderlich ist. Ebenso ist es möglich, beispielsweise dann, wenn günstige Regenerationsbedingungen vorliegen, dass die Regeneration einer zweiten Nachbehandlungseinrichtung auf einen Zeitpunkt, der während, unmittelbar vor oder nach der Durchführung eines Regenerationsvorganges bei der ersten Nachbehandlungseinrichtung liegt, vorgezogen wird. Bei der Abstimmung der Regenerationsvorgänge aufeinander ist zu berücksichtigen, dass oftmals die Regeneration einer zweiten Nachbehandlungseinrichtung ohne großen weiteren Aufwand, insbesondere ohne großen zusätzlichen Energieaufwand durchgeführt werden kann, nachdem die Regeneration der ersten Abgasnachbehandlungseinrichtung erfolgte.

Die Aktivierung eines Regenerations-Betriebszustandes wird dabei in Abhängigkeit des aktuellen Betriebszustandes und des zu erwartenden Betriebszustandes beeinflusst.

Bei der Kombination verschiedener Abgasnachbehandlungseinrichtungen in einer Abgasreinigungsanlage kann so bei ähnlichen Anforderungen an den Regenerationsprozess und somit den Regenerationsbedingungen anhand einer Regenerationsmatrix die Regeneration so durchgeführt werden, dass je nach Beladungswert eine Kanngrenze und eine Mussgrenze der Regeneration definiert wird. Die Grenzen lassen sich durch das ermittelte Fahrprofil noch an den Betrieb des Fahrzeuges anpassen, wie dies vorstehend schon erläutert wurde. Es ist möglich, dass vor, während oder nach der Regeneration einer ersten Abgasnachbehandlungseinrichtung eine zweite Abgasnachbehandlungseinrichtung mit mäßig erhöhtem Energieaufwand regeneriert wird, obwohl die Beladung dieser zweiten Abgasnachbehandlungseinrichtung alleine noch keine Regenerationsanforderung ausgelöst hätte. Die Kanngrenze für die Regenerationsstartbedingung einer Abgasnachbehandlungseinrichtung muß dabei überschritten sein, bevor die Regeneration einer Abgasnachbehandlungseinrichtung durchgeführt wird. Nach Überschreiten der Mussgrenze durch die Regenerationsstartbedingung erfolgt in jedem Falle eine Regeneration einer Abgasnachbehandlungseinrichtung.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert.

Im übrigen wird die Erfindung anhand der in der nachfolgenden Zeichnung dargestellten Abbildungen näher erläutert; dabei zeigt:
- Abb. 1: den schematischen Temperaturverlauf bei einer Regeneration einer Abgasnachbehandlungseinrichtung;
- Abb. 2: eine schematische Kennfeldaufteilung für eine Fahrprofil-Ermittlung;
- Abb. 3: eine Darstellung weiterer möglicher Beurteilungsgrößen für eine Fahrprofilerkennung;
- Abb. 4: ein Beispiel für die Erkennung und Bewertung verschiedener Fahrprofile;
- Abb. 5: ein Beispiel für eine dynamische Schwellwertanpassung in Abhängigkeit des Betriebprofils;
- Abb. 6: ein Beispiel für die Anpassung der gekoppelten Durchführung von Regenerationsvorgängen bei zwei Abgasnachbehandlungseinrichtungen; und
- Abb. 7: ein Beispiel für die relative Anpassung der Regenerationsstartbedingungen in Abhängigkeit des Betriebsprofils.

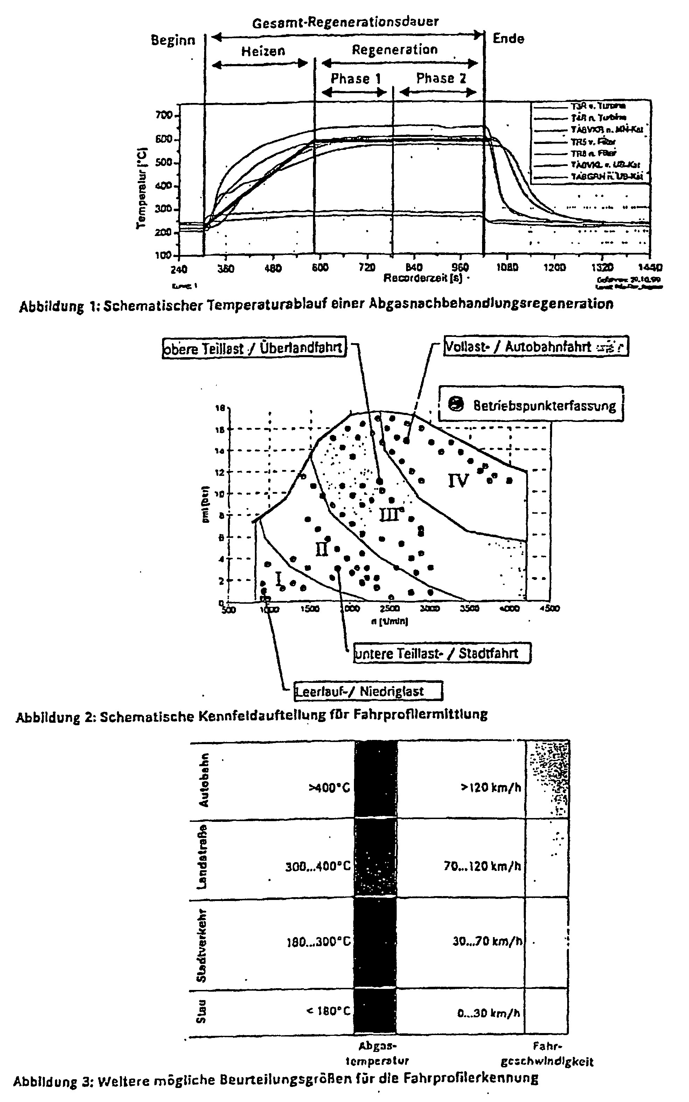

Die Abb. 1 zeigt den zeitlichen Verlauf eines Regenerationsvorgangs der Regeneration einer Abgasreinigungsanlage bzw. einer Abgasnachbehandlungseinrichtung einer solchen. Der Regenerationsvorgang beginnt mit dem Erfüllen der Regenerationsstartbedingungen. Es erfolgt zunächst eine erste Phase, bei der die Abgasreinigungsanlage aufgeheizt wird. Während dieser Phase "Heizen" wird eine Temperaturerhöhung auf ca. 600°C innerhalb der Abgasreinigungsanlage vorgenommen, diese ist erforderlich, um den Regenerationsvorgang an sich durchzuführen. Nach der Aufheizung erfolgt in zwei Phasen, der Phase 1 und der Phase 2 die eigentliche Regeneration der Abgasreinigungsanlage. Während des Regenerationsvorgangs werden in der Abgasnachbehandlungseinrichtung angesammelte Schadstoffe desorbiert und dabei unschädlich gemacht. Während dieser Phase wird die Temperatur auf dem erforderlichen erhöhten Niveau, das beispielsweise zwischen 500°C und 600°C liegt, gehalten. Mit Ende des Regenerationsvorganges ist die Regeneration der Abgasreinigungsanlage abgeschlossen. Die Temperatur senkt sich dann progressiv wieder auf die dem Betriebszustand des Fahrzeugs entsprechende Abgastemperatur ab.

Die Abb. 2 zeigt in schematischer Darstellung ein Beispiel dafür, wie aufgrund von Betriebspunkten ein Betriebsprofil festlegbar ist. Hierzu werden die Werte der Motordrehzahl sowie des mittleren Brennkammerdruckes (pmi) erfasst. In einem vorab festgelegten Programm werden die einzelnen Betriebspunkte über ein entsprechendes Kennfeld in beispielsweise vier Bereiche oder Fahrzustände aufgeteilt. Niedrige Motordrehzahl und niedriger Brennraumdruck lassen dabei auf den Leerlaufzustand bzw. einen Niedriglastzustand des Fahrzeuges schließen. Mit steigender Drehzahl und/oder steigendem mittleren Brennraumdruck wird dann auf einen Bereich, den sogenannten unteren Teillastbereich, wie er im Stadtverkehr auftritt, geschlossen. Mit weiterer Zunahme der Drehzahl und vor allem des mittleren Brennraumdruckes wird dann auf einen oberen Teillastbereich, wie er bei der Überlandfahrt, also außerorts, auftritt, geschlossen. Daran schließt sich der Volllastbereich an, der im wesentlichen den Bereich größter mittlerer Brennraumdrücke umfasst und auch im oberen Drehzahlbereich liegt.

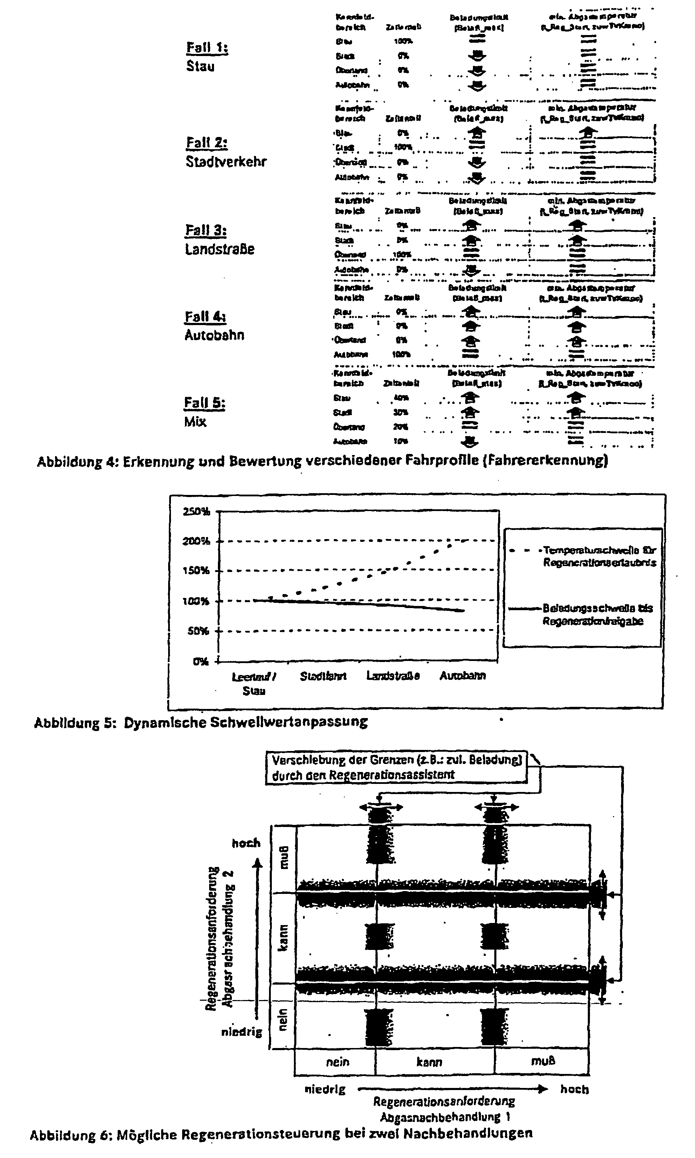

In der Abb. 3 ist in schematischer Darstellung dargestellt, wie aufgrund der aufgetretenen Abgastemperatur und der Fahrgeschwindigkeit eine Klassifizierung des aktuellen Fahrzustandes in unterschiedliche Betriebsprofile, nämlich Stau, Stadtverkehr, Landstraße und Autobahn vorgenommen werden kann. Bei Fahrgeschwindigkeiten unterhalb von 30 km/h und bei Abgastemperaturen unterhalb von 180°C wird auf Stau oder Leerlaufzustand geschlossen. Bei Fahrgeschwindigkeiten im Bereich von 30 km/h bis 70 km/h und bei Abgastemperaturen, die zwischen 180°C und 300°C liegen, wird auf einen Betrieb im Stadtverkehr geschlossen. Auf einen oberen Teillastbereich bzw. einen Überlandfahrverkehr wird bei Abgastemperaturen zwischen 300°C und 400°C und bei Fahrgeschwindigkeiten zwischen 70 km/h und 120km/h geschlossen. Der darüber liegende Temperaturbereich und der darüber liegende Geschwindigkeitsbereich lässt auf Autobahnfahrt schließen. Diese Klassifizierung kann die gemäß der Abb. 2 ersetzen oder ergänzen.

Ein Betriebsprofil eines Fahrzeuges umfasst nun die Ermittlung, welcher zeitliche Anteil der einzelnen Fahrzustände in bezug auf die gesamte Betriebszeit angegeben ist.

In qualitativer Darstellung zeigt die Abb. 4 die Anpassung der vorgegebenen Regenerationsbedingungen an das ermittelte Betriebsprofil. Dies ist für fünf Fälle dargelegt. Während des Betriebsprofils Fall 1 (Stau), ist der Fahrzustand "Stau" zu einem Zeitanteil von 100% gegeben. In diesem Fall werden die Regenerationsstartbedingungen für den Kennfeldbereich "Stau" konstant gehalten, während für die Betriebsbereiche "Start, "Überland" und Autobahn" das Beladungslimit, also die Beladung ab, der die Regenerationsstartbedingungen erfüllt ist, abgesenkt wird. Die weitere Regenerationsstartbedingung "minimale Abgastemperatur" wird konstant gehalten. Dies führt dazu, dass dann, wenn der Betriebsbereich "Stau" verlassen wird, die Regenerationsstartbedingung Beladungslimit sehr schnell erfüllt ist und deshalb sehr früh ein Regenerationsbetriebszustand ausgelöst wird, während dem eine Regeneration der Abgasreinigungsanlage durchgeführt wird.

In dem zweiten Fall, nämlich dem des Stadtverkehrs, wird in gleicher Weise das Beladungslimit, das zur Erfüllung der Regenerationsstartbedingungen erfüllt wird, für die Betriebszustände "Überland" und "Autobahn" erhöht. Im Gegensatz dazu wird jedoch der Grenzwert für das Beladungslimit im Falle des Betriebszustands "Stau" erhöht, so dass in diesem Fahrbetriebszustand die Regenerationsstartbedingungen erst zu einem späteren Zeitpunkt erfüllt sind. Zusätzlich ist hier auch ein höherer Wert für die minimale Abgastemperatur erforderlich, bevor die Regenerationsstartbedingungen erfüllt sind.

Für den Fall des Landstraßenbetriebs, also des erhöhten Teillastbetriebs, werden wiederum die Regenerationsbedingungen für diesen Fall selbst konstant gehalten, während die Regenerationsstartbedingungen für den höheren Lastfall der Autobahn abgesenkt werden, indem das Beladungslimit, ab dem der Regenerationsvorgang stattfindet, abgesenkt wird. Für die Fälle einer weniger günstigen Ausgangssituation für die Regeneration, nämlich den Stadtverkehr oder den Stauzustand, werden die Regenerationsstartbedingungen nach oben gesetzt, d.h. das Beladungslimit und die minimale erforderliche Abgastemperatur werden erhöht.

Dementsprechend werden für den vierten Fall, nämlich dem Autobahnverkehr, für diesen Zustand zwar das Beladungslimit und die minimale Abgastemperatur konstant gehalten, jedoch das Beladungslimit und die erforderliche minimale Abgastemperatur, die zur Erfüllung der Regenerationsstartbedingungen führen, für jede andere Fahrzustandsklasse erhöht.

Soweit nun ein Betriebsprofil ermittelt wurde, das in jedem Fall eine Mischung der hier vorbeschriebenen Betriebszustände erfüllt, wird, beispielsweise durch entsprechend der Wahrscheinlichkeit ihres Auftretens gewichtete Überlagerung der Regenerationsstartbedingungen, dies als eine Mischung aus den vier vorgenannten Vorgehensweisen dargestellt.

Dies ist in dem Schaubild für den Fall fünf eines Mischbetriebes aus 40% Stau, 30% Stadtverkehr und 20% Überlandverkehr und 10% Autobahnfahrt dargestellt. In diesem Fall werden die Regenerationsstartbedingungen für den Staubetrieb und den Stadtverkehr so angehoben, dass das Beladungslimit und die erforderliche minimale Abgastemperatur erhöht werden. Demgegenüber bleiben die Werte für den Fall des Überlandverkehrs gleich, während für den Fall des Autobahnverkehrs eine Absenkung des Kriteriums "Beladungslimit" stattfindet, wohingegen das Kriterium "minimale Abgastemperatur" nicht verändert wird.

In der Abb. 5 ist dargestellt, wie die Regenerationsstartbedingungen angepasst werden, um einem unterschiedlichen aktuellen Betriebszustand Rechnung zu tragen. Während die entsprechenden Grenz- bzw. Schwellwerte, die den Sollbetriebsbereich charakterisieren, beispielsweise als Werte für den Zustand bei Leerlauf festgelegt wurden, wird der Sollbetriebsbereich Beladungsschwellwert der Abgasreinigungsanlage mit zunehmendem Lastprofil und daher erhöhter Last des Fahrzeuges abgesenkt. Es wird also eine Regeneration schon zu einem früheren Zeitpunkt durchgeführt, wenn die Lastbedingungen hoch sind, wie dies beispielsweise bei der Autobahnfahrt gegeben ist. Zugleich ändert sich die Temperaturschwelle der Abgastemperatur, ab der die Durchführung einer Regeneration zulässig ist. Diese verschiebt sich mit zunehmender Last des Fahrzeugs nach oben.

Gemäß der Erfindung ist es auch möglich, beispielsweise aus dem Vergleich von für die aktuelle Fahrt ermittelten Betriebsprofilen mit abgespeicherten Betriebsprofilen festzustellen, ob ein für die Regeneration der Abgasreinigungsanlage günstiger Fahrzustand zu erwarten ist. Falls dies der Fall ist, können die Regenerationsstartbedingungen so angepasst werden, dass bei schlechten Ausgangsbedingungen, also niedrigem Zustand des Motors, die Regeneration erst zu einem späteren Zeitpunkt durchgeführt wird, um den Beginn der Regeneration möglichst in einen Zeitpunkt besserer Regenerationsbedingungen zu verschieben. Hierzu kann beispielsweise auch die Information eines Navigationssystems verwendet werden, woraus beispielsweise abgeleitet werden kann, in welcher Zeit und nach welcher Fahrstrecke bei Verfolgung der geplanten Fahrtroute der Fahrer den Stadtverkehr verlassen wird und beispielsweise die Überlandfahrt oder die Autobahnfahrt beginnen wird, während der günstigere Regenerationsbedingungen zu erwarten sind.

In der Abb. 6 ist dargelegt, wie die Steuerung der Regeneration durchgeführt werden kann, wenn die Abgasreinigungsanlage mehrere Nachbehandlungseinrichtungen umfasst. Dies ist in der Abb. 6 für den Fall von zwei Abgasnachbehandlungseinrichtungen dargelegt. Für jede der beiden Abgasreinigungsnachbehandlungen ist eine Kann-Regenerationsstartbedingung und eine Muss-Regenerationsstartbedingung vorgegeben. Jeder dieser Regenerationsstartbedingungen kann entsprechend dem vorher Dargelegten auch an das Betriebsprofil angepasst werden. Die Ausgangswerte der Kann- und der Mussbedingungen sind dabei jeweils durch eine Linie dargestellt, während ein geschwärzter Bereich um diese Linien herum die Anpassung an das Betriebsprofil darstellt. In der Figur 6 ist auf der Abszisse die Regenerationsbedingung für die Abgasnachbehandlungseinrichtung 1 dargestellt. In einem ersten, links von der Kann-Regenerationsstartbedingung liegenden Bereich wird eine Regeneration der Abgasnachbehandlungseinrichtung 1 nicht durchgeführt. In einem zweiten Bereich zwischen der Kann-Regenerationsstartbedingung und der Muss-Regenerationsstartbedingung kann eine Regeneration der Abgasnachbehandlungseinrichtung 1 erfolgen. Sie wird jedoch ohne das Vorliegen weiterer Umstände nicht durchgeführt. Rechts von der Linie, die die Muss- Regenerationsstartbedingung darstellt, muss die Regeneration der Abgasnachbehandlungseinrichtung 1 erfolgen. Entsprechend sind diese Bereiche auf der Ordinatenachse für die Abgasnachbehandlungseinrichtung 2 dargestellt. Es ergibt sich somit eine Unterteilung der möglichen Zustände der Abgasnachbehandlungseinrichtungen in neun Felder. Solange eine der beiden Abgasnachbehandlungseinrichtungen in einem Bereich ist, in dem die Kann-Schwelle noch nicht überschritten ist, wird eine Regeneration dieser einen Abgasnachbehandlungseinrichtung unabhängig davon, ob die andere Abgasnachbehandlungseinrichtung regeneriert wird oder nicht, nicht durchgeführt. Ist die Kann-Schwelle einer Abgasnachbehandlungseinrichtung überschritten und die Muss-Schwelle der anderen Abgasnachbehandlungseinrichtung ebenfalls überschritten, so erfolgt die Regeneration beider Abgasnachbehandlungseinrichtungen. In dem Bereich, in dem die Kantenschwellen beider Abgasnachbehandlungseinrichtungen überschritten sind, jedoch noch keine Muss-Schwelle überschritten ist, wird man eine Regeneration einer Abgasnachbehandlungseinrichtung nicht durchführen, es sei denn, es liegen günstige Regenerationsbedingungen vor, was jedoch in der Regel relativ selten ist. Durch die Einführung des Kann-Schwellenwertes und des Muss-Schwellenwertes wird somit die Regeneration von mehreren Abgasnachbehandlungseinrichtungen aneinander angepasst. In gleicher Art und Weise kann dies auch erfolgen, wenn mehr als zwei Abgasnachbehandlungseinrichtungen vorhanden sind. Es erfolgt dann eine gemeinsame Regeneration all der Abgasnachbehandlungseinrichtungen, deren Kann-Schwellenwert überschritten ist, sobald der Muss-Schwellenwert einer Abgasnachbehandlungseinrichtung überschritten ist.

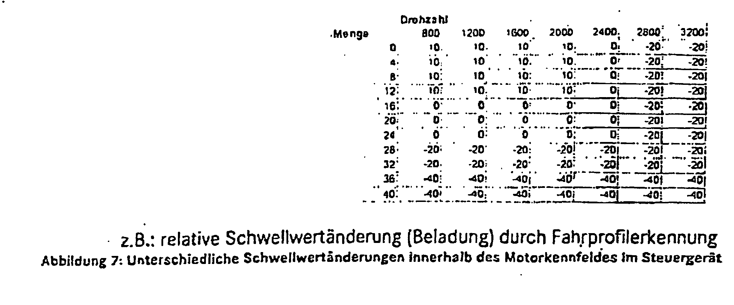

In der Abb. 7 ist dargestellt, wie die Regenerationsstartbedingungen an die Abhängigkeit vom aktuellen Betriebszustand vorgebbar sind. Die Abb. 7 zeigt ein Kennfeld, bei dem in Abhängigkeit der Motordrehzahl und der Kraftstoff-Einspritzmenge die prozentuale Anpassung des Schwellenwertes für die maximale Beladung der Abgasreinigungsanlage bzw. einer Abgasnachbehandlungseinrichtung dieser Abgasreinigungsanlage dargestellt ist. In den Fällen geringer Einspritzmenge und geringer Drehzahl erfolgt eine geringe Erhöhung, beispielsweise um 10%, der maximalen Beladung. Mit zunehmender Drehzahl bzw. mit zunehmender Einspritzmenge wird der Schwellenwert zunächst auf einem vorgegebenen Grundwert belassen. Mit weiter zunehmender Drehzahl bzw. weiter zunehmender Kraftstoffeinspritzmenge wird der Beladungsschwellenwert um 20% oder sogar um 40% abgesenkt, so dass die Regeneration aufgrund der vorliegenden günstigeren Bedingungen früher bei niedrigeren Werten der Beladung durchgeführt wird. Dieser dadurch ermittelte Wert kann dann, wie in Bezug auf die Abb. 4 und 5 beschrieben, noch auf an das Fahrprofil bzw. Betriebsprofil des Fahrzeugs angepasst werden.

## Patentansprüche

1. Verfahren zum Betrieb einer Abgasreinigungsanlage einer Brennkraftmaschine eines Kraftfahrzeugs, bei dem
- wenigstens ein Abgasreinigungs-Betriebsparameter überwacht und immer dann ein Regenerations-Betriebszustand zur wenigstens teilweisen Regeneration der Abgasreinigungsanlage aktiviert wird, wenn vorgegebene Regenerationsstartbedingungen vorliegen, zu denen gehört, dass der wenigstens eine Abgasreinigungs-Betriebsparameter einen vorgebbaren Sollbetriebsbereich verlassen hat, und
- ein spezifisches Betriebsprofil der Brennkraftmaschine während ihres Betriebes ermittelt wird,
**dadurch gekennzeichnet, dass**
- der Sollbetriebsbereich einer Abgastemperatur als dem oder einem der Abgasreinigungs-Betriebsparameter in Abhängigkeit von dem ermittelten Betriebsprofil variabel vorgegeben wird und/oder
- das spezifische Betriebsprofil den zeitlichen Anteil jedes von mehreren vorgebbaren Fahrzuständen des Kraftfahrzeuges in Bezug auf eine Gesamtbetriebszeit angibt und der Sollbetriebsbereich des wenigstens einen Abgasreinigungs-Betriebsparameters in Abhängigkeit von einem Vergleich von für eine aktuelle Fahrt ermittelten Betriebsprofilen mit abgespeicherten Betriebsprofilen variabel vorgegeben wird.

2. Verfahren nach Anspruch 1,
**dadurch gekennzeichnet, dass**
das Betriebsprofil in Abhängigkeit wenigstens eines der Werte aus
- Betriebspunkt der Verbrennungseinrichtung, wie beispielsweise Drehzahl der Brennkraftmaschine;
- Lastzustand, wie beispielsweise Kraftstoff-Einspritzmenge oder mittlerer Brennkammerdruck (pmi);
- Abgastemperatur; und
- Fahrzeuggeschwindigkeit
ermittelt wird.

3. Verfahren nach Anspruch 2,
**dadurch gekennzeichnet, dass**
zur Ermittlung des Betriebsprofils eine zeitliche, statistische Häufigkeitsverteilung von auftretenden Betriebszuständen herangezogen wird.

4. Verfahren nach einem der vorhergehenden Ansprüche,
**dadurch gekennzeichnet, dass**
aus im Fahrzeug erfaßten Informationen ein Fahrzustand ermittelt wird, der bei der Ermittlung des Betriebsprofils berücksichtigt wird.

5. Verfahren nach Anspruch 4,
**dadurch gekennzeichnet, dass**
der Fahrzustand eine Einteilung in Klassen beinhaltet, die den Lastzustand der Brennkraftmaschine repräsentieren.

6. Verfahren nach Anspruch 4 oder 5,
**dadurch gekennzeichnet, dass**
der Fahrzustand des Fahrzeuges in Abhängigkeit zumindest einer der folgenden Informationen:
- im Motormanagement erfaßte Größen, wie Motordrehzahl und Zündzeitpunkt;
- im Getriebemanagement erfaßte Größen, wie Übersetzung und Schaltzeitpunkte; und
- aus einem Navigationssystem abgeleiteten Informationen, wie ermittelte Fahrtroute zum gegebenen Fahrziel,
ermittelt wird.

7. Verfahren nach einem der vorhergehenden Ansprüche,
**dadurch gekennzeichnet, dass**
aus dem zeitlichen Verlauf des Betriebsprofils auf ein zukünftig zu erwartendes Betriebsprofil geschlossen wird.

8. Verfahren nach einem der vorhergehenden Ansprüche,
**dadurch gekennzeichnet, dass**
der zeitliche Verlauf des Betriebsprofils erfaßt wird und aus dem Vergleich dieses Betriebsprofils mit anderen, früher ermittelten Betriebsprofilen verglichen wird, wobei aus der Ähnlichkeit des Verlaufs von Betriebsprofilen auf das zukünftig zu erwartende Betriebsprofil geschlossen wird.

9. Verfahren nach Anspruch 7 oder 8,
**dadurch gekennzeichnet, dass**
in Abhängigkeit des aktuellen Betriebszustandes und des zu erwartenden Betriebsprofils die Aktivierung des Regenerations-Betriebszustandes beeinflusst wird.

10. Verfahren nach einem der vorhergehenden Ansprüche,
**dadurch gekennzeichnet, dass**
die Abgasreinigungsanlage mehr als eine Nachbehandlungseinrichtung umfasst, die jeweils bei Vorliegen spezifischer Regenerationsbedingungen die Durchführung einer wenigstens teilweisen Regeneration erfordern, wobei die Regenerations-Betriebszustände der Nachbehandlungseinrichtungen aufeinander abgestimmt durchgeführt werden.

## Claims

1. Method for the operation of an exhaust gas purification unit of an internal combustion engine of a motor vehicle, in which:
- at least one exhaust gas purification operating parameter is monitored and a regenerative operating condition for the at least partial regeneration of the exhaust gas purification unit is always initiated when specified regeneration start conditions are present, including the condition that the said at least one exhaust gas purification operating parameter has moved outside a specifiable nominal operating range, and
- a specific operating profile of the internal combustion engine is determined during its operation,
**characterised in that**
- the nominal operating range of an exhaust gas temperature is specified as the, or as one of the exhaust gas purification operating parameter(s), variably as a function of the operating profile determined, and/or
- the specific operating profile indicates the time fraction of each of several specifiable drive conditions of the motor vehicle referred to a total operating time, and the nominal operating range of the said at least one exhaust gas purification operating parameter is specified variably as a function of a comparison between operating profiles determined during an actual journey and stored operating profiles.

2. Method according to Claim 1,
**characterised in that**
the operating profile is determined as a function of at least one of the values:
- operating point of the combustion device, such as the speed of the internal combustion engine;
- load condition, such as quantity of fuel injected or mean combustion chamber pressure (pmi);
- exhaust gas temperature; and
- speed of the vehicle.

3. Method according to Claim 2,
**characterised in that**
a time-based, statistical frequency distribution of operating conditions that occur is used to determine the operation profile.

4. Method according to any of the preceding claims,
**characterised in that**
from data obtained in the vehicle a drive condition is determined, which is taken into account in the determination of the operating profile.

5. Method according to Claim 4,
**characterised in that**
the drive condition includes a subdivision into classes that correspond to the load condition of the internal combustion engine.

6. Method according to Claims 4 or 5,
**characterised in that**
the drive condition of the vehicle is determined as a function of one of the following data:
- parameters detected for engine management purposes, such as engine speed and ignition timing;
- Parameters detected for transmission management purposes, such as transmission ratio and gear-shift times; and
- data derived from a navigation system, such as the driving route determined for the specified destination.

7. Method according to any of the preceding claims,
**characterised in that**
the future operating profile to be expected is concluded from the time variation of the operating profile.

8. Method according to any of the preceding claims,
**characterised in that**
the time variation of the operating profile is determined, a comparison of this operating profile with other operating profiles determined earlier is made, and from the similarity of the variation of the operating profiles a conclusion is drawn about the said future operating profile expected.

9. Method according to Claims 7 or 8,
**characterised in that**
the initiation of the regenerative operating condition is influenced as a function of the current operating condition and the expected operating profile.

10. Method according to any of the preceding claims,
**characterised in that**
the exhaust gas purification unit comprises more than one after-treatment section, each of these calling for at least partial regeneration to be carried out when specific regeneration conditions exist, such that the regenerative operating conditions of the said after-treatment devices are initiated in correlation with one another.

## Revendications

1. Procédé pour le fonctionnement d'une installation de purification des gaz d'échappement d'un moteur thermique d'un véhicule automobile, dans lequel
- au moins un paramètre de fonctionnement de la purification des gaz d'échappement est surveillé, et un état de fonctionnement de régénération pour la régénération au moins partielle de l'installation de purification des gaz d'échappement est activé chaque fois qu'il se présente des conditions prédéterminées de démarrage de régénération qui incluent que ledit au moins un paramètre de fonctionnement de la purification des gaz d'échappement quitte une plage prédéterminée de fonctionnement de consigne, et
- un profil spécifique de fonctionnement du moteur thermique est déterminé pendant son fonctionnement,
**caractérisé en ce que**
- la plage de fonctionnement de consigne d'une température des gaz d'échappement est définie de façon variable à titre de paramètre ou de l'un des paramètres de fonctionnement de la purification des gaz d'échappement en fonction du profil de fonctionnement déterminé, et/ou
- le profil spécifique de fonctionnement indique la part temporelle de chacun parmi plusieurs états de circulation prédéterminés du véhicule automobile par rapport à un temps de fonctionnement total, et la plage de fonctionnement de consigne dudit au moins un paramètre de fonctionnement de la purification des gaz d'échappement est définie de façon variable en fonction d'une comparaison entre des profils de fonctionnement déterminés pour un voyage actuel et des profils de fonctionnement mémorisés.

2. Procédé selon la revendication 1, **caractérisé en ce que** le profil de fonctionnement est déterminé en fonction d'au moins l'une des valeurs parmi
- le point de fonctionnement de l'installation de combustion, tel que par exemple la vitesse de rotation du moteur thermique ;
- l'état de charge, tel que par exemple la quantité injectée de carburant ou la pression moyenne de la chambre de combustion (pmi) ;
- la température des gaz d'échappement ; et
- la vitesse du véhicule.

3. Procédé selon la revendication 2, **caractérisé en ce que** pour déterminer le profil de fonctionnement, on a recours à une distribution de fréquence temporelle statistique des états de fonctionnement qui apparaissent.

4. Procédé selon l'une des revendications précédentes, **caractérisé en ce que** l'on détermine un état de circulation à partir des informations détectées dans le véhicule, état qui est pris en compte lors de la détermination du profil de fonctionnement.

5. Procédé selon la revendication 4, **caractérisé en ce que** l'état de fonctionnement inclut une classification en classes qui représentent l'état de charge du moteur thermique.

6. Procédé selon l'une ou l'autre des revendications 4 et 5, **caractérisé en ce que** l'état de circulation du véhicule est déterminé en fonction de l'une au moins des informations suivantes :
- des grandeurs détectées dans la gestion du moteur, telles que la vitesse de rotation du moteur et l'instant d'allumage ;
- des grandeurs détectées dans la gestion de la boîte de vitesses, telles que le rapport de transmission et les instants de changement de vitesses ; et
- des informations dérivées à partir d'un système de navigation, tels que l'itinéraire déterminé vers la destination donnée du voyage.

7. Procédé selon l'une des revendications précédentes, **caractérisé en ce qu'**à partir de l'évolution temporelle du profil de fonctionnement, on conclut à un profil de fonctionnement à attendre dans le futur.

8. Procédé selon l'une des revendications précédentes, **caractérisé en ce que** l'on détecte l'évolution temporelle du profil de fonctionnement et on compare ce profil de fonctionnement avec d'autres profils de fonctionnement déterminés auparavant, et à partir de la ressemblance de l'évolution des profils de fonctionnement, on conclut au profil de fonctionnement à attendre dans le futur.

9. Procédé selon l'une ou l'autre des revendications 7 et 8, **caractérisé en ce qu'**en fonction de l'état de fonctionnement actuel et du profil de fonctionnement à attendre, on influence l'activation de l'état de fonctionnement de régénération.

10. Procédé selon l'une des revendications précédentes, **caractérisé en ce que** l'installation de purification des gaz d'échappement comprend plus d'un dispositif de post-traitement, qui exigent la mise en oeuvre d'une régénération au moins partielle chaque fois qu'il se présente des conditions spécifiques de régénération, les états de fonctionnement de régénération des dispositifs de post-traitement étant mis en oeuvre de façon accordée les uns aux autres.
